# EUROPÄISCHE PATENTSCHRIFT

(11) **EP 3 959 846 B1**
(45) Veröffentlichungstag und Bekanntmachung des Hinweises auf die Patenterteilung: **11.12.2024**
(21) Anmeldenummer: 20719213.9
(22) Anmeldetag: 22.04.2020
(51) Int. Cl.: H04L 12/413

(54) **MODULARER SWITCH ZUM EINSATZ IN EINEM DATENÜBERTRAGUNGS- UND STEUERUNGSSYSTEM**
MODULAR SWITCH FOR USE IN A DATA TRANSMISSION AND CONTROL SYSTEM
COMMUTATEUR MODULAIRE DESTINÉ À ÊTRE UTILISÉ DANS UN SYSTÈME DE TRANSMISSION DE DONNÉES ET DE COMMANDE

(30) Priorität: 24.04.2019 BE 201905271
(43) Veröffentlichungstag der Anmeldung: 02.03.2022
(73) Patentinhaber: PHOENIX CONTACT GMBH & CO. KG, 32825 Blomberg (DE)
(72) Erfinder: MÜLLER, Martin, 32676 Lügde (DE)
(74) Vertreter: Blumbach · Zinngrebe Patentanwälte PartG mbB
(86) Internationale Anmeldenummer: PCT/EP2020/061230
(87) Internationale Veröffentlichungsnummer: WO 2020/216796

(56) Entgegenhaltungen:
- EP-A1- 2 421 100
- EP-A2- 3 032 732
- DE-A1- 10 148 470
- DE-A1- 102009 001 177

## Beschreibung

Die Erfindung betrifft einen modularen Switch, der insbesondere in einem Datenübertragungs- und Steuerungssystem, wie zum Beispiel in einem Automatisierungssystem, zum Einsatz kommen kann, so wie ein Datenübertragungs- und Steuerungssystem mit einem solchen modularen Switch.

Ganz allgemein zeichnet sich ein Automatisierungssystem dadurch aus, dass mehrere Sensoren und Aktoren über ein Übertragungsmedium mit einer überlagerten Steuerungseinrichtung Daten austauschen können. Um die Installation eines Automatisierungssystems zu strukturieren und zu vereinfachen, können sogenannte I/O-Module vorgesehen sein, die über das Übertragungsmedium mit der überlagerten Steuerung verbunden sind, wobei an jedes I/O-Modul mehrere Sensoren und Aktoren angeschlossen werden können. Dies wird beispielhaft im Stand der Technik EP 3 032 732 A2 aufgezeigt.

Der Erfindung liegt die Aufgabe zugrunde, einen modularen Switch zum Einsatz in einem Datenübertragungs- und Steuerungssystem bereitzustellen, der eine einfache Skalierung des Datenübertragungs- und Steuerungssystems sowie eine flexible Anpassung eines Datenübertragungs- und Steuerungssystems an unterschiedliche Übertragungsmedien und verschiedene Kommunikationsprotokolle ermöglicht.

Ein Kerngedanke der Erfindung kann darin gesehen werden, einen aus Modulen flexibel aufbaubaren Switch zu schaffen, bei dem die interne Kommunikation, d.h. die Kommunikation zwischen den Modulen und insbesondere zwischen den Schnittstellen bzw. Anschlussports der Module sowie vorzugsweise zu einer externen, an den modularen Switch angeschlossene Steuerungseinrichtung gemäß dem Ethernet-Kommunikationsprotokoll erfolgt, während die Kommunikation zwischen den Schnittstellen der Module und den an diesen Schnittstellen angeschlossenen elektronischen oder elektrischen Geräten über unterschiedliche Übertragungsmedien erfolgen kann.

Das oben genannte technische Problem wird zum einen durch die Merkmale des Anspruchs 1 gelöst.

Angemerkt sei, dass es sich bei dem Datenübertragungs- und Steuerungssystem beispielsweise um ein industrielles Automatisierungssystem oder ein gebäudetechnisches Automatisierungssystem und bei dem externen ethernetfähigen Gerät um ein ethernetfähiges E/A-Gerät, wie zum Beispiel einen Sensor oder Aktor, handeln kann.

Das erste Modul kann wenigstens eine optische Schnittstelle zum Anschließen eines Lichtwellenleiters aufweist, wobei die optische Schnittstelle über einen elektrooptischen Wandler mit dem ersten Bussegment verbunden ist, und/oder die wenigstens eine erste Schnittstelle kann zum Anschließen eines zwei-, oder vier- oder achtadrigen Kabels ausgebildet sein.

Gemäß einer vorteilhaften Weiterbildung kann der modulare Switch um ein drittes Modul erweitert werden, welches mehrere dritte Schnittstellen und ein drittes, eine ethernetbasierte Kommunikation unterstützendes Bussegment aufweist, wobei die dritten Schnittstellen jeweils als IO-Link-Schnittstellen zum Anschließen eines externen IO-Link-Geräts ausgebildet und jeweils über ein Gateway mit dem dritten Bussegment verbunden sind, wobei das dritte Modul in einem separaten Gehäuse angeordnet ist und wenigstens eine Schnittstelle zum elektrischen Koppeln des dritten Bussegments mit dem ersten oder zweiten Bussegment aufweist.

Gemäß einer vorteilhaften Weiterbildung kann der modulare Switch optional oder zusätzlich um ein viertes Modul erweitert werden, welches mehrere vierte Schnittstellen und ein viertes, eine ethernetbasierte Kommunikation unterstützendes Bussegment aufweist, wobei die vierten Schnittstellen jeweils als drahtlose Schnittstellen zum Anschließen eines externen drahtlosen Geräts ausgebildet und jeweils über ein Gateway mit dem vierten Bussegment verbunden sind, wobei das vierte Modul in einem separaten Gehäuse angeordnet ist und wenigstens eine Schnittstelle zum elektrischen Koppeln des vierten Bussegments mit einem der Bussegmente aufweist.

Um eine kompakte Bauweise zu ermöglichen, können die Gehäuse der Module in einer Seite-an-Seite-Anordnung unmittelbar nebeneinander anreihbar sein. Die Gehäuse der Module können zum Bespiel mechanische Rastelemente aufweisen, die ein mechanisches Zusammenfügen der Module erleichtern.

Gemäß einer vorteilhaften Weiterbildung können die Gehäuse der Module Rastelemente aufweisen, mittels derer die Gehäuse an einer Tragschiene aufgerastet werden können. Vorzugsweise ist die interne Steuereinheit im ersten Modul implementiert. Denkbar ist, dass die interne Steuereinheit auch in einem separaten Modul, oder einem der zweiten bis vierten Module des modularen Switchs implementiert ist. Gemäß einer zweckmäßigen Weiterbildung kann das erste Modul mehrere optische Schnittstelle zum Anschließen jeweils eines Lichtquellenleiters aufweisen, wobei die optischen Schnittstellen jeweils über einen elektrooptischen Wandler mit dem ersten Bussegment verbunden sind. Denkbar ist, dass zusätzlich oder optional optische Schnittstellen zum Anschließen jeweils eines Lichtwellenleiters in dem zweiten, und/oder dritten, und/oder vierten und/oder in einem weiteren Modul implementiert sein können, wobei jede optische Schnittstelle dann über einen elektrooptischen Wandler, d.h. einen Medienkonverter, mit dem entsprechenden Bussegment verbunden ist.

Das oben genannte technische Problem wird zum anderen durch die Merkmale des Anspruchs 8 gelöst. Demnach ist ein Datenübertragungs- und Steuerungssystem vorgesehen, dass wenigstens einen modularen Switch nach einem der vorstehenden Ansprüche 1 bis 7 enthält. Weiterhin weist das Datenübertragungs- und Steuerungssystem eine über ein zwei-, oder vier- oder achtadriges Kabel an eine der ersten Schnittstellen des ersten Moduls angeschlossene Steuerungseinrichtung und wenigstens ein ethernetfähiges Gerät, insbesondere ein ethernetfähiges E/A-Gerät, mit einer 2-Draht-Schnittstelle auf, welches über ein 2-Draht-Kabel an eine der zweiten Schnittstellen des zweiten Moduls modularen Switch zur Übertragung von Ethernet-Datenpaketen angeschlossen ist.

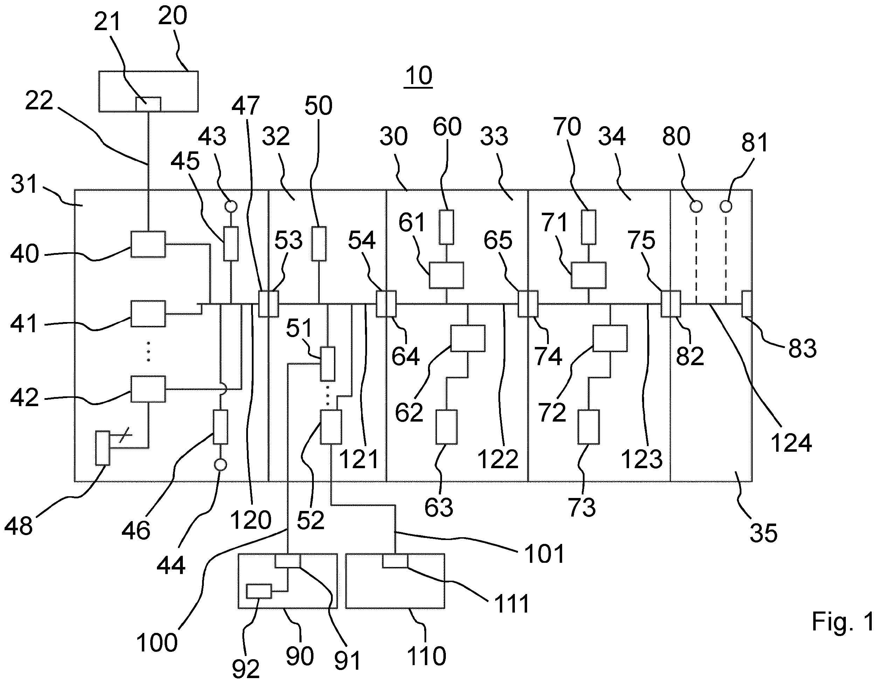

Die Erfindung wird nachfolgend anhand eines Ausführungsbeispiels in Verbindung mit einer einzigen Figur näher erläutert.

In der Figur ist ein beispielhaftes Datenübertragungs- und Steuerungssystem 10 dargestellt, welches beispielsweise ein industrielles Automatisierungssystem sein kann. Das beispielhafte Automatisierungssystem 10 umfasst beispielsweise eine überlagerte ethernetfähige Steuerungseinrichtung 20, die als speicherprogrammierbare Steuerung (SPS) ausgebildet sein kann. Weiterhin kann das beispielhafte Automatisierungssystem 10 wenigstens einen modularen Switch 30 aufweisen. Unter dem Ausdruck "ethernetfähig" ist vorzugsweise zu verstehen, dass eine Einrichtung zur Kommunikation gemäß dem Standard-Ethernet-Kommunikationsprotokoll ausgebildet ist.

Der modulare 30 Switch weist ein erstes Modul 31 auf, welches ein erstes Bussegment 120 und wenigstens eine erste ethernetbasierte Schnittstelle, vorzugsweise aber mehrere erste ethernetbasierte Schnittstellen 40 bis 42 aufweist, an die jeweils ein zwei-, oder vier- oder achtadriges Kabel 22 zum Anschließen eines externen elektronischen Geräts anschließbar ist. Die ersten Schnittstellen 40 bis 42 sind elektrisch mit dem ersten Bussegment 120 verbunden. Über das erste Bussegment 120 und die zwei-, oder vier- oder achtadrigen Kabel können vorzugsweise Ethernet-Datenpakete gemäß dem Standard Ethernet-Kommunikationsprotokoll übertragen werden. Die drei ersten Schnittstellen 40 bis 42 können beispielsweise als RJ45-Buchsen ausgebildet sein. Die Steuerungseinrichtung 20 weist eine ethernetbasierte Schnittstelle 21 auf. Somit kann die Steuerungseinrichtung 20 zum Senden und Empfangen von Ethernet-Datenpaketen beispielsweise über das zwei- oder vier- oder achtadrige Kabel 22 mit der ersten Schnittstelle 40 des ersten Moduls 31 elektrisch verbunden werden.

Bei dem gezeigten Ausführungsbeispiel kann das erste Modul 31 auch optische Schnittstellen 43 und 44 zum Anschließen jeweils eines Lichtwellenleiters aufweisen. Die beiden optischen Schnittstellen 43 und 44 sind jeweils über einen elektrooptischen Wandler 45 beziehungsweise 46 mit dem ersten Bussegment 120 verbunden. Die elektrooptischen Wandler fungieren hierbei als Medienkonverter.

Der modulare Switch 30 umfasst ein zweites Modul 32, welches ein zweites Bussegment 121 und mehrere zweite Schnittstellen 50 bis 52 aufweist, an die jeweils ein externes ethernetfähiges Gerät, insbesondere ein ethernetfähiges E/A-Gerät, mit einer 2-Draht-Schnittstelle über ein 2-Draht-Leitung anschließbar ist. Die zweiten Schnittstellen 50 bis 52 sind jeweils an den zweiten Bussegment 121 angeschlossen und können die Funktion eines Zweidrahtwandlers ausführen, um die über eine 2-Draht-Leitung empfangenen Ethernet-Datenpakete zur Übertragung über eine vier- oder achtadrige Leitung und umgekehrt umzusetzen.

Gezeigt sind zwei externe ethernetfähige E/A-Geräte 90, 110 mit jeweils einer 2-Draht-Schnittstelle 91 bzw. 111. Die 2-Draht-Schnittstellen 91 und 111 können als RJ45-Buchsen ausgebildet sein, wobei die Schnittstelle 91 über eine 2-Draht-Leitung 100 mit dem E/A-Gerät 90 und die Schnittstelle 111 über eine 2-Draht-Leitung 101 mit dem E/A-Gerät 110 verbunden sein können. Bei dem ethernetfähigen E/A-Gerät 90 kann es sich um einen Temperatursensor handeln, während das ethernetfähige E/A-Gerät 110 zum Beispiel ein Aktor sein kann. Über das zweite Bussegment 121 und die 2-Draht-Leitungen 100 und 101 können Ethernet-Datenpakete übertragen werden. Bei den zweiten Schnittstellen 50 bis 52 des zweiten Moduls 32 und den 2-Draht-Schnittstellen 91 und 111 der ethernetfähigen Geräte 90 bzw. 110 kann es sich jeweils beispielsweise um eine Single-Pair-Ethernet-Schnittstelle handeln, während die 2-Draht-Leitungen 100 und 101 jeweils als Single-Pair-Ethernet-Leitung ausgebildet sein können.

Das erste Modul 31 und das zweite Modul 32 sind jeweils in einem separaten Gehäuse angeordnet und weisen jeweils eine Schnittstelle 47 beziehungsweise 53 zum elektrischen Koppeln des ersten Bussegments mit dem zweiten Bussegment auf. Die Schnittstelle 47 schließt das erste Bussegment 120 ab, während die Schnittstelle 53 das zweite Bussegment 121 abschließt. Die Schnittstellen 47 und 53 sind an gegenüberliegenden Gehäuseseiten so angeordnet, dass die Gehäuse der Module 31 und 32 in einer Seite-an-Seite-Anordnung unmittelbar nebeneinander anreihbar und die beiden Bussegmente 120 und 121 im montierten Zustand elektrisch miteinander verbunden sind. Das zweite Bussegment 121 ist an seinem zweiten Ende mit einer weiteren Schnittstelle 54, die an der gegenüberliegenden Seite des Gehäuses angeordnet und zum elektrischen Koppeln mit einem Bussegment eines weiteren Moduls ausgebildet ist, verbunden.

Der modulare Switch 10 kann um ein drittes Modul 33 erweitert werden, das beispielsweise mit dem zweiten Modul 32, aber auch mit dem ersten Modul 31 verbunden sein kann. Das dritte Modul 33 weist mehrere dritte Schnittstellen 60, 63 sowie ein drittes Bussegment 122 auf, über welches vorzugsweise Ethernet-Datenpakete gemäß dem Standard Ethernet-Kommunikationsprotokoll übertragen werden können. Die dritten Schnittstellen 60, 63 sind jeweils als IO-Link-Schnittstellen ausgebildet, an die jeweils ein externes IO-Link-Gerät angeschlossen werden kann. Bei den IO-Link-Geräten kann es sich um intelligente Sensoren oder Aktoren handeln, die mit der überlagerten Steuerungseinrichtung 20 kommunizieren können. Die IO-Link-Schnittstelle 60 ist über ein Gateway 61 mit dem dritten Bussegment elektrisch verbunden, während die andere IO-Link-Schnittstelle 63 über ein Gateway 62 elektrisch mit dem dritten Bussegment 122 verbunden ist. Denkbar ist auch, dass die IO-Link-Schnittstelle 60 und das Gateway 61 bzw. die IO-Link-Schnittstelle 63 und das Gateway 62 jeweils eine einzige Baugruppe bilden Es ist selbstverständlich, dass das dritte Modul 33 auch mehr als zwei IO-Link-Schnittstellen aufweisen kann. Die Gateways 61 und 62 fungieren insbesondere als Protokollwandler, die das IO-Link-Kommunikationsprotokoll in das Ethernet-Kommunikationsprotokoll und umgekehrt umwandeln, so dass IO-Link-Geräte mit der überlagerten ethernetfähigen Steuerungseinrichtung 20 über den modularen Switch 30 Daten austauschen können.

Das dritte Modul 33 ist wiederum in einem separaten Gehäuse angeordnet und weist eine das dritte Bussegment 122 abschließende Schnittstelle 64 zum elektrischen Koppeln beispielsweise mit dem zweiten Bussegment 121 des zweiten Modul 32 auf. Die Schnittstellen 64 und 54 sind an gegenüberliegenden Gehäuseseiten so angeordnet, dass die Gehäuse der Module 32 und 33 in einer Seite-an-Seite-Anordnung unmittelbar nebeneinander anreihbar und die beiden Bussegmente 121 und 122 im montierten Zustand elektrisch miteinander verbunden sind. Das dritte Bussegment 122 ist an seinem zweiten Ende mit einer weiteren Schnittstelle 65, die an der gegenüberliegenden Seite des Gehäuses angeordnet und zum elektrischen Koppeln mit einem Bussegment eines weiteren Moduls ausgebildet ist, verbunden.

Bei dem dargestellten Ausführungsbeispiel kann der modulare Switch 30 um ein viertes Modul 34 erweitert werden, welches beispielsweise mit dem dritten Modul 33 verbunden werden kann. Das vierte Modul 34 weist mehrere vierte Schnittstellen 70, 73 sowie ein viertes Bussegment 123 auf. Die vierten Schnittstellen 70, 73 können als drahtlose Schnittstelle ausgebildet sein, an die jeweils ein externes Funkgerät angeschlossen werden kann. Die drahtlosen Schnittstellen 70 und 73 können über ein Gateway 71 beziehungsweise ein Gateway 72 mit dem vierten Bussegment 123 elektrisch verbunden sein. Denkbar ist auch, dass die drahtlose Schnittstelle 70 und das Gateway 71 bzw. die drahtlose Schnittstelle 73 und das Gateway 72 jeweils eine einzige Baugruppe bilden Es ist selbstverständlich, dass das vierte Modul 34 auch mehr als zwei drahtlose Schnittstellen aufweisen kann. Die Gateways 71 und 72 fungieren insbesondere wiederum als Protokollwandler, die ein drahtloses bzw. Funk-Kommunikationsprotokoll in das Ethernet-Kommunikationsprotokoll und umgekehrt umwandeln, so dass drahtlose Geräte mit der überlagerten ethernetfähigen Steuerungseinrichtung 20 über den modularen Switch 30 Daten austauschen können.

Das vierte Modul 34 ist wiederum in einem separaten Gehäuse angeordnet und weist eine das vierte Bussegment 123 abschließende Schnittstelle 74 zum elektrischen Koppeln beispielsweise mit dem dritten Bussegment 122 des dritten Moduls 33 auf. Die Schnittstellen 74 und 65 sind an gegenüberliegenden Gehäuseseiten so angeordnet, dass die Gehäuse der Module 33 und 34 in einer Seite-an-Seite-Anordnung unmittelbar nebeneinander anreihbar und die beiden Bussegmente 122 und 123 im montierten Zustand elektrisch miteinander verbunden sind. Das vierte Bussegment 123 ist an seinem zweiten Ende mit einer weiteren Schnittstelle 75, die an der gegenüberliegenden Seite des Gehäuses angeordnet und zum elektrischen Koppeln mit einem Bussegment eines weiteren Moduls ausgebildet ist, verbunden.

Um die Module 31 bis 34 und deren elektrische und/oder elektronischen Bauteile mit Energie versorgen zu können, kann ein weiteres Modul 35 vorgesehen sein, das beispielsweise mit dem Modul 34 gekoppelt werden kann. Das Modul 35 weist neben einem weiteren Bussegment 124 zwei Anschlüsse auf, an die beispielsweise eine externe 24V-Gleichspannungsquelle angeschlossen werden kann. Eine effiziente Realisierung sieht vor, dass über die Bussegmente 120 bis 124 auch die Versorgungsspannung zu den jeweiligen Modulen übertragen werden kann. In diesem Fall sind die beiden Anschlüsse 80 und 81 elektrisch mit dem Bussegment 124 verbunden. Das Bussegment 124 kann an beiden Enden jeweils mit einer Schnittstelle 83 beziehungsweise 82 verbunden sein, um elektrisch mit dem Bussegment eines angrenzenden Moduls verbunden werden zu können.

Die Gehäuse der Module 31 bis 35 können Rastelemente aufweisen, so dass Gehäuse der Module auch mechanisch miteinander koppelbar sind. Im zusammengefügten Zustand der Module 31 bis 35 bilden die Bussegmente 120 bis 124 einen Bus zur Übertragung von Ethernet-Datenpaketen und gegebenenfalls zur Energieübertragung.

Zweckmäßigerweise können die Gehäuse der Module 31 bis 35 Rastmittel zum Aufrasten auf einer Tragschiene (nicht dargestellt) aufweisen. In diesem Fall erstrecken sich die Bussegmente 120 bis 124 parallel zur Längsachse der Tragschiene.

Um Daten zwischen der überlagerten Steuerungseinrichtung 20 und den an den ersten Schnittstellen 40 bis 42, und/oder den optischen Schnittstellen 43 und 44, und/oder den zweiten Schnittstellen 50 bis 52, und/oder den dritten Schnittstellen 60, 63 und/oder den vierten Schnittstellen 70, 73 angeschlossenen E/A-Geräten austauschen zu können, ist eine switchinterne Steuereinheit 48 vorgesehen, die dazu ausgebildet ist, die Weiterleitung der über die Bussegmente 120 bis 123 übertragenen Ethernet-Datenpakete zu den entsprechenden Schnittstellen beziehungsweise zu den entsprechenden Gateways zu steuern. Vorzugsweise ist die interne Steuereinheit 48 im ersten Modul 31 angeordnet.

Das beispielhaft in der Figur gezeigte Datenübertragungs- und Steuerungssystem 10 weist somit beispielsweise den modularen Switch 30, die ethernetfähige Steuerungseinrichtung 20, die über das vier- oder achtadrige Kabel 22 an der Schnittstelle 40 des modularen Switch 20 angeschlossen ist, sowie die beiden ethernetfähigen E/A-Geräte 90 und 110 auf, die jeweils über die jeweils die 2-Draht-Leitung 100 beziehungsweise 101 an die Schnittstellen 51 und 52 des zweiten Moduls 32 angeschlossen sind, auf.

Wie bereits gesagt, kann es sich bei dem ethernetfähigen E/A-Gerät 90 um einen Temperatursensor handeln, der unter Steuerung einer Steuereinheit 92, die beispielsweise als Mikrokontroller ausgebildet sein kann, digitale Messwerte in Ethernet-Datenpakete packt und über die 2-Draht-Ethernet-Schnittstelle 91, die 2-Draht-leitung 100, die zweite Schnittstelle 51 und die beiden Bussegmente 121 und 120 sowie über die erste Schnittstelle 40 zur überlagerten Steuerungseinrichtung 20 übertragen kann.

Dank des modular aufgebauten Switches 30 weist das Datenübertragungs- und Steuerungssystem 10 eine hohe Flexibilität im Hinblick auf einsetzbare Übertragungsmedien und anwendbare Kommunikationsprotokolle sowie einen hohen Grad an Skalierbarkeit auf. Zudem kann dank des modularen Switches 30 das Datenübertragungs- und Steuerungssystem 10 und somit insbesondere industrielle Automatisierungssysteme ohne Einsatz von I/O-Modulen, an die die E/A-Feldgeräte üblicherweise angeschlossen werden, installiert werden.

## Patentansprüche

1. Modularer Switch (30) zum Einsatz in einem Datenübertragungs- und Steuerungssystem (10), wobei der modulare Switch (30) folgende Merkmale enthält:
ein erstes Modul (31), welches ein erstes, eine ethernetbasierte Kommunikation unterstützendes Bussegment (120) und wenigstens eine erste Schnittstelle (40-42) zum Senden und Empfangen von Ethernet-Datenpaketen aufweist, wobei die wenigstens eine erste Schnittstelle (40-42) mit dem ersten Bussegment (120) elektrisch verbunden ist,
ein zweites Modul (32), welches ein zweites, eine ethernetbasierte Kommunikation unterstützendes Bussegment (121) und mehrere zweite Schnittstellen (50-52) aufweist, an die jeweils ein externes ethernetfähiges Gerät (90, 110) mit einer 2-Draht-Schnittstelle (91, 111) über eine 2-Draht-Leitung (100, 101) zum Übertragen von Ethernet-Datenpaketen anschließbar ist, wobei
die zweiten Schnittstellen (50-52) elektrisch mit dem zweiten Bussegment (121) verbunden sind, wobei das erste Modul (31) und das zweite Modul (32) jeweils in einem separaten Gehäuse angeordnet sind und jeweils eine Schnittstelle (47, 53) zum elektrischen Koppeln des ersten und zweiten Bussegments (120, 121) aufweisen, und wobei
der modulare Switch (30) eine interne Steuereinheit (48) aufweist, die dazu ausgebildet ist, die Übertragung von Ethernet-Datenpaketen über die Bussegmente (120-123) zu oder von den Schnittstellen (40-44; 50-52; 60, 63; 70, 73) zu steuern.

2. Modularer Switch nach Anspruch 1,
**dadurch gekennzeichnet, dass**
das erste Modul (31) wenigstens eine optische Schnittstelle (43, 44) zum Anschließen eines Lichtwellenleiters aufweist, wobei die optische Schnittstelle (43, 44) über einen elektrooptischen Wandler (45, 46) mit dem ersten Bussegment (120) verbunden ist, und/oder wobei die wenigstens eine erste Schnittstellen (40-42) zum Anschließen eines zwei-, oder vier- oder achtadrigen Kabels (22) ausgebildet ist.

3. Modularer Switch nach Anspruch 1 oder 2,
**gekennzeichnet durch**
ein drittes Modul (33), welches mehrere dritte Schnittstellen (60, 63) und ein drittes, eine ethernetbasierte Kommunikation unterstützendes Bussegment (122) aufweist, wobei die dritten Schnittstellen (60, 63) jeweils als IO-Link-Schnittstellen zum Anschließen eines externen IO-Link-Geräts ausgebildet und jeweils über ein Gateway (61, 62) mit dem dritten Bussegment (122) verbunden sind, wobei das dritte Modul (33) in einem separaten Gehäuse angeordnet ist und wenigstens eine Schnittstelle (64, 65) zum elektrischen Koppeln des dritten Bussegments (122) mit dem ersten oder zweiten Bussegment (120, 121) aufweist.

4. Modularer Switch nach Anspruch 1, 2 oder 3
**gekennzeichnet durch**
ein viertes Modul (34), welches mehrere vierte Schnittstellen (70, 73) und ein viertes, eine ethernetbasierte Kommunikation unterstützendes Bussegment (123) aufweist, wobei die vierten Schnittstellen (70, 73) jeweils als drahtlose Schnittstellen zum Anschließen eines externen drahtlosen Geräts ausgebildet und jeweils über ein Gateway (71, 72) mit dem vierten Bussegment (123) verbunden sind, wobei das vierte Modul (34) in einem separaten Gehäuse angeordnet ist und wenigstens eine Schnittstelle (74, 75) zum elektrischen Koppeln des vierten Bussegments (123) mit einem der Bussegmente (120-122) aufweist.

5. Modularer Switch nach einem der Ansprüche 1 bis 4,
**dadurch gekennzeichnet, dass**
die Gehäuse der Module in einer Seite-an-Seite-Anordnung nebeneinander anreihbar sind.

6. Modularer Switch nach einem der Ansprüche 1 bis 5,
**dadurch gekennzeichnet, dass**
die Gehäuse der Module auf einer Tragschiene aufrastbar sind.

7. Modularer Switch nach einem der vorstehenden Ansprüche, **dadurch gekennzeichnet, dass** die interne Steuereinheit (48) im ersten Modul (31) implementiert ist.

8. Datenübertragungs- und Steuerungssystem (10) umfassend wenigstens einen modularen Switch (30) nach einem der vorstehenden Ansprüche,
eine über ein zwei-, oder vier- oder achtadriges Kabel (22) an eine der ersten Schnittstellen (40) des ersten Moduls (31) angeschlossene Steuerungseinrichtung (20) und wenigstens ein ethernetfähiges Gerät (90, 110) mit einer 2-Draht-Schnittstelle (91, 111), welches über ein 2-Draht-Kabel (100, 101) an eine der zweiten Schnittstellen (51, 52) des zweiten Moduls (32) zur Übertragung von Ethernet-Datenpaketen angeschlossen ist.

9. Datenübertragungs- und Steuerungssystem (10) nach Anspruch 8,
**dadurch gekennzeichnet, dass**
das ethernetfähige Gerät (90, 110) ein ethernetfähiges E/A-Gerät ist.

## Claims

1. A modular switch (30) for use in a data transmission and control system (10), the modular switch (30) comprising:
a first module (31) having a first bus segment (120) supporting Ethernet-based communication and at least one first interface (40-42) for transmitting and receiving Ethernet data packets, wherein the at least one first interface (40-42) is electrically connected to the first bus segment (120),
a second module (32), which has a second bus segment (121) supporting Ethernet-based communication and a plurality of second interfaces (50-52), to each of which an external Ethernet-capable device (90, 110) with a 2-wire interface (91, 111) can be connected via a 2-wire line (100, 101) for transmitting Ethernet data packets,
the second interfaces (50-52) being electrically connected to the second bus segment (121), wherein the first module (31) and the second module (32) are each arranged in a separate housing and each have an interface (47, 53) for electrically coupling the first and second bus segments (120, 121), and wherein
the modular switch (30) has an internal control unit (48) which is configured to control the transmission of Ethernet data packets via the bus segments (120-123) to or from the interfaces (40-44; 50-52; 60, 63; 70, 73).

2. The modular switch according to claim 1,
**characterised in that**
the first module (31) has at least one optical interface (43, 44) for connecting an optical fibre, wherein the optical interface (43, 44) is connected to the first bus segment (120) via an electro-optical converter (45, 46), and/or wherein the at least one first interface (40-42) is configured for connecting a two-wire or four-wire or eight-wire cable (22).

3. The modular switch according to claim 1 or 2, **characterised by**
a third module (33) which has a plurality of third interfaces (60, 63) and a third bus segment (122) supporting Ethernet-based communication, the third interfaces (60, 63) each being designed as IO-Link interfaces for connecting an external IO-Link device and each being connected to the third bus segment (122) via a gateway (61, 62) to the third bus segment (122), wherein the third module (33) is arranged in a separate housing and has at least one interface (64, 65) for electrically coupling the third bus segment (122) to the first or second bus segment (120, 121).

4. The modular switch according to claim 1, 2 or 3 **characterised by**
a fourth module (34) which has a plurality of fourth interfaces (70, 73) and a fourth bus segment (123) supporting Ethernet-based communication, wherein the fourth interfaces (70, 73) are each designed as wireless interfaces for connecting an external wireless device and are each connected to the fourth bus segment (123) via a gateway (71, 72), the fourth module (34) being arranged in a separate housing and having at least one interface (74, 75) for electrically coupling the fourth bus segment (123) to one of the bus segments (120-122).

5. The modular switch according to one of claims 1 to 4, **characterised in that**
the housings of the modules can be arranged side by side in a side-by-side arrangement.

6. The modular switch according to one of claims 1 to 5, **characterised in that**
the housings of the modules can be snapped onto a mounting rail.

7. The modular switch according to one of the preceding claims,
**characterised in that**
the internal control unit (48) is implemented in the first module (31).

8. A data transmission and control system (10) comprising at least one modular switch (30) according to one of the preceding claims,
a control device (20) connected via a two- or four- or eight-wire cable (22) to one of the first interfaces (40) of the first module (31) and at least one Ethernet-capable device (90, 110) with a 2-wire interface (91, 111), which is connected via a 2-wire cable (100, 101) to one of the second interfaces (51, 52) of the second module (32) for the transmission of Ethernet data packets.

9. The data transmission and control system (10) according to claim 8,
**characterised in that**
the Ethernet-capable device (90, 110) is an Ethernet-capable I/O device.

## Revendications

1. Commutateur (30) modulaire destiné à être utilisé dans un système de commande et de transmission de données (10), le commutateur (30) modulaire comprenant les caractéristiques suivantes : un premier module (31), lequel comporte un premier segment de bus (120) prenant en charge une communication basée sur Ethernet et au moins une première interface (40 à 42) pour envoyer et recevoir des paquets de données Ethernet, dans lequel l'au moins une première interface (40 à 42) est connectée électriquement au premier segment de bus (120), un deuxième module (32), lequel comporte un deuxième segment de bus (121) prenant en charge une communication basée sur Ethernet et une pluralité de deuxièmes interfaces (50 à 52) auxquelles respectivement un appareil (90, 110) externe compatible Ethernet, comportant une interface à 2 fils (91, 111), est connecté au moyen d'un conducteur à 2 fils (100, 101) pour transmettre des paquets de données Ethernet, dans lequel
les deuxièmes interfaces (50 à 52) sont connectées électriquement au deuxième segment de bus (121), dans lequel le premier module (31) et le deuxième module (32) sont respectivement disposés dans un boîtier séparé et comportent respectivement une interface (47, 53) pour coupler électriquement les premier et deuxième segments de bus (120, 121), et
le commutateur (30) modulaire comportant une unité de commande (48) interne, laquelle est conçue pour commander la transmission de paquets de données Ethernet par l'intermédiaire des segments de bus (120 à 123) vers ou depuis les interfaces (40 à 44 ; 50 à 52 ; 60, 63 ; 70, 73).

2. Commutateur modulaire selon la revendication 1,
**caractérisé en ce que**
le premier module (31) comporte au moins une interface (43, 44) optique pour connecter un câble à fibre optique, dans lequel l'interface (43, 44) optique est reliée au premier segment de bus (120) par l'intermédiaire d'un convertisseur (45, 46) électro-optique, et/ou dans lequel l'au moins une première interface (40 à 42) est conçue pour connecter un câble (22) à deux, quatre ou huit fils.

3. Commutateur modulaire selon la revendication 1 ou 2,
**caractérisé par**
un troisième module (33), lequel comporte une pluralité de troisièmes interfaces (60, 63) et un troisième segment de bus (122) prenant en charge une communication basée sur Ethernet, dans lequel les troisièmes interfaces (60, 63) sont conçues respectivement sous la forme d'interfaces IO-Link pour connecter un appareil IO-Link externe et sont respectivement connectées, par l'intermédiaire d'une passerelle (61, 62), au troisième segment de bus (122), dans lequel le troisième module (33) est disposé dans un boîtier séparé et comporte au moins une interface (64, 65) pour coupler électriquement le troisième segment de bus (122) au premier ou au deuxième segment de bus (120, 121).

4. Commutateur modulaire selon la revendication 1, 2 ou 3,
**caractérisé par**
un quatrième module (34), lequel comporte une pluralité de quatrièmes interfaces (70, 73) et un quatrième segment de bus (123) prenant en charge une communication basée sur Ethernet, dans lequel les quatrièmes interfaces (70, 73) sont respectivement conçues sous forme d'interfaces sans fil pour connecter un appareil sans fil externe et sont respectivement connectées, par l'intermédiaire d'une passerelle (71, 72), au quatrième segment de bus (123), le quatrième module (34) étant disposé dans un boîtier séparé et comportant au moins une interface (74, 75) pour coupler électriquement le quatrième segment de bus (123) à l'un des segments de bus (120 à 122).

5. Commutateur modulaire selon l'une quelconque des revendications 1 à 4,
**caractérisé en ce que**
les boîtiers des modules peuvent être disposés en série de manière juxtaposée dans une configuration côte à côte.

6. Commutateur modulaire selon l'une quelconque des revendications 1 à 5,
**caractérisé en ce que**
les boîtiers des modules peuvent être encliquetés sur un rail porteur.

7. Commutateur modulaire selon l'une quelconque des revendications précédentes, **caractérisé en ce que** l'unité de commande (48) interne est installée dans le premier module (31).

8. Système de commande et de transmission de données (10) comprenant au moins un commutateur (30) modulaire selon l'une quelconque des revendications précédentes, un dispositif de commande (20) connecté par l'intermédiaire d'un câble à deux, quatre ou huit fils (22) à l'une des premières interfaces (40) du premier module (31) et au moins un appareil (90, 110) compatible Ethernet comportant une interface à 2 fils (91, 111), lequel est connectée par l'intermédiaire d'un câble à 2 fils (100, 101) à l'une des deuxièmes interfaces (51, 52) du deuxième module (32) pour transmettre des paquets de données Ethernet.

9. Système de commande et de transmission de données (10) selon la revendication 8, **caractérisé en ce que**
l'appareil (90, 110) compatible Ethernet est un appareil E/S compatible Ethernet.
